## Europäisches Patentamt
## European Patent Office
## Office européen des brevets

(19)

(11) Publication number: **0 024 422**
**B1**

(12)

# EUROPEAN PATENT SPECIFICATION

(45) Date of publication of patent specification: **03.08.83**

(21) Application number: **80900536.6**

(22) Date of filing: **25.02.80**

(86) International application number:
**PCT/US80/00194**

(87) International publication number:
**WO 80/01906 18.09.80 Gazette 80/21**

(51) Int. Cl.³: **C 02 F 1/78, B 01 F 3/04,
B 05 B 7/30**

(54) **WATER PURIFICATION SYSTEM EMPLOYING OZONE INJECTION.**

(30) Priority: **05.03.79 US 17478**

(43) Date of publication of application:
**11.03.81 Bulletin 81/10**

(45) Publication of the grant of the patent:
**03.08.83 Bulletin 83/31**

(84) Designated Contracting States:
**GB**

(56) References cited:
**BE - A - 335 707**
**FR - A - 526 347**
**FR - A - 750 951**
**GB - A - 216 233**
**US - A - 718 683**
**US - A - 1 420 838**
**US - A - 1 430 303**
**US - A - 1 803 628**
**US - A - 2 055 808**
**US - A - 3 421 999**
**US - A - 3 856 671**
**US - A - 3 997 631**
**US - A - 4 049 552**
**US - A - 4 105 721**

(73) Proprietor: **SHELBY, Carroll**
**19021 South Figueroa**
**Gardena, CA 90248 (US)**

(73) Proprietor: **Baumgartner, Walter P.**
**Route 4 Box 288**
**Las Lunas, NM 87031 (US)**

(73) Proprietor: **Yancey, Bruce O.**
**Route 1 Box 53B**
**Roosevelt, UT 84066 (US)**

(72) Inventor: **BAUMGARTNER, Walter P.**
**Route 4 Box 288**
**Las Lunas, NM 87031 (US)**
Inventor: **YANCEY, Bruce O.**
**Route 1 Box 53B**
**Roosevelt, UT 84066 (US)**

(74) Representative: **Grundy, Derek George Ritchie et al,**
**CARPMAELS & RANSFORD 43, Bloomsbury Square**
**London WC1A 2RA (GB)**

Courier Press, Leamington Spa, England

# Water purification system employing ozone injection

This invention relates to the purification of water, and more particularly to a system for generating ozone and injecting such ozone into a water stream.

The use of ozone for the disinfection of water has been used at least since the early 1900's and is now being used in many installations in Canada and in Europe. The use of ozone for purification of water has not as yet come into widespread use in the United States, such as the general acceptance and wide-spread use of chlorine, which is readily available and can be easily and economically employed. In recent years, interest has increased in the use of ozone in view of its powerful oxidizing properties and almost instantaneous action and the absence of the formation of a permanent residual material. Further, in swimming pool purification systems, the nuisance of periodically having to add chlorine to the water and the generally unpleasant effects of chlorine on the eyes and nose make an ozone purification system particularly interesting. Prior art ozone purification systems are thoroughly discussed in Chapter VIII (by W.E.J. Diaper) of *Ozone in Water and Waste Water Treatment,* edited by Francis L. Evans, Environmental Protection Agency, published in 1972 by Ann Arbor Science Publications, Ann Arbor, Michigan.

One of the problems encountered in prior art ozone purification systems is the need for having a pumping system for effectively injecting the ozone into a rapidly moving water stream which is passing into the swimming pool or other water utilization device. If, of course, there is a failure in such a pumping system, the water purification ceases with the resultant undesirable, often dangerous results. This means that a highly reliable and often expensive pumping system must be employed along with some sort of backup system and/or warning device should the pumping device fail, all of which adds to the cost of the installation.

BE—A—335707 describes a liquid ozonator characterised by a device for forming a stream of water into a tubular form by means of a converging conical conduit 1. Ozone is fed to the exterior surface of the water stream through apertures 10 adjacent a narrow end portion of the conical conduit 1. A long and narrow deflector member 12 passes through the conical conduit 1 and it extends deeply beyond the narrowed end portion of the conduit 1 into a diverging conical conduit 4. According to one arrangement, the deflector member 12 is hollow and it has orifices 22 located adjacent the narrowed end portion of conduit 1. The hollow deflector member 12 feeds ozone to the interior surface of the water stream. The device is complex in structure and, although some aspiration effect occurs, the device does not achieve the injection or implosion effect of the invention. US—A—3421999 describes a combination of an ozone generator and an injector device. Contaminated fluid is supplied, under pressure, by a pipe 52 to a venturi nozzle 53. This causes aspiration of ozone through a gap 51 whereby the ozone is mixed with the contaminated fluid. Again, although there is some aspiration effect, this device does not achieve the injection or implosion effect of the present invention.

The present invention provides a system for generating ozone and injecting it into a water stream. The system comprises an ozone generator, which may be formed by a plurality of concentrically arranged electrodes between which air is passed. Means for generating a high voltage, such as an alternating voltage, is applied between opposing electrodes so as to create an electric discharge thereby converting the air to ozone. The system also has an injector nozzle device which includes first chamber means into which a water stream is fed at one end. The chamber means has a narrowed neck portion formed at its other end and a deflector member is mounted in the narrowed neck portion. The deflector member is disc-shaped, whereby a ring-shaped slit is formed between the outer edge of the deflector member and the inner wall of the neck portion. The deflector member thereby deflects the water stream outwardly in the form of a cone. Second chamber means having one end connected to the first chamber means by the ring-shaped slit, and being substantially wider than the first chamber means, receives the water stream cone. The angle of the water stream cone is such that it strikes the walls of the second chamber means at a region remote from the ring-shaped slit so that an air pocket is formed between the water stream and the walls of the second chamber means. The motion of the water stream creates a partial vacuum in this air pocket such that ozone, provided by the ozone generator, is fed to the injector nozzle device in the area of the air pocket and is efficiently sucked into the injector nozzle device and thereby injected or imploded into the water stream.

The disc-shaped deflector member and the ring-shaped slit advantageously result in a high velocity water stream and the formation of a high suction air pocket. This air pocket could not be formed without having the second chamber means, which is substantially wider than the first chamber means, into which the water stream can expand conically. The device described in BE—A—335707 does not have the latter structure and hence does not provide the advantageous effect of the invention. The suction effect is so great that it obviates, for example, the need for a pump which is usually required for properly injecting ozone into water. Moreover, compared with the device described in the latter Belgian reference, the system of the invention can be embodied in a simple and economical structure which is highly effective for injecting or imploding ozone into a water stream.

One way of carrying out the invention will now be described with reference to the accompanying drawings, in which:

FIG. 1 is a perspective view illustrating a preferred embodiment of the invention;

FIG. 2 is a cross-sectional view taken along the plane indicated by 2—2 in Fig. 1;

FIG 3 is a cross-sectional view taken along the plane indicated by 3—3 in FIG 1;

FIG 4 is a cross-sectional view illustrating the ozone generator of the preferred embodiment; and

FIG 5 is a schematic view illustrating the formation of the suction pocket in the preferred embodiment of the invention.

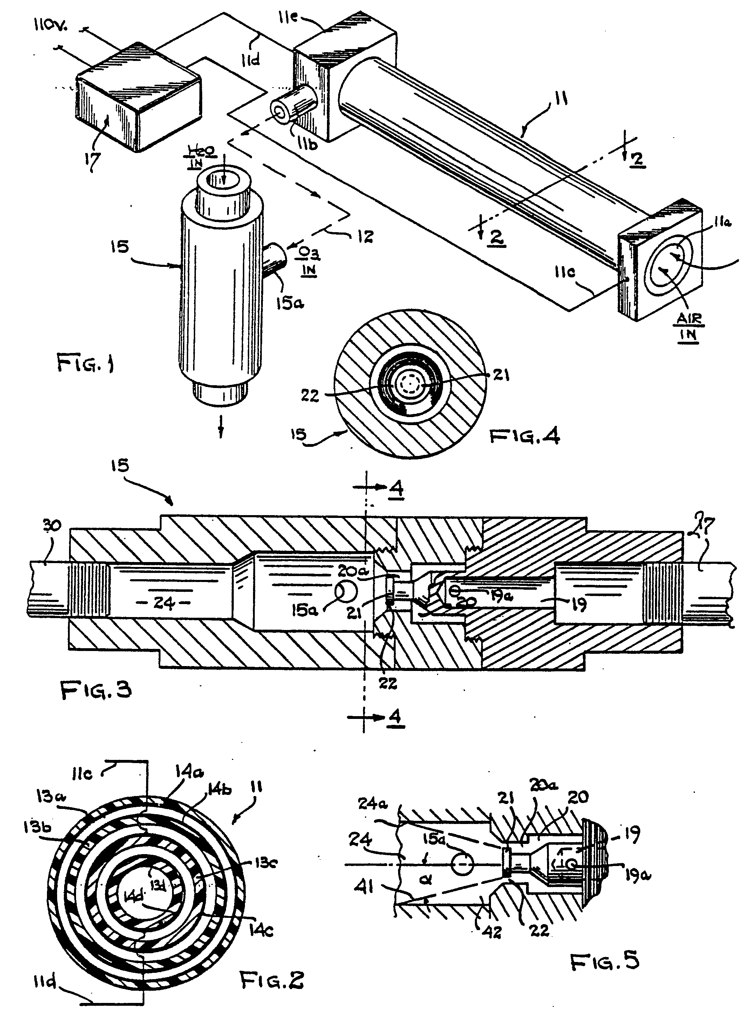

Referring now to FIGS 1—4, a preferred embodiment of the invention is illustrated. Ozone generator 11 is formed from a plurality of cylindrical, concentric plastic tubes 13a—13d which may be of acrylic plastic. The inner walls of tubes 13a—13d are covered with conductive foils 14a—14d respectively, as for example, of aluminum or copper. One end, 11a, of the ozone generator is left open to permit the free access of air to the spaces between the walls of the tubes, the opposite end 11e of the generator being sealed off. An outlet tube, 11b, is provided near the opposite end of the ozone generator for feeding ozone to the injector nozzle 15.

A high voltage transformer 17, which may be connected to a 110 volt AC power line generates a voltage of the order of 10,000 volts. This voltage is fed between electrical connectors 11c and 11d of the ozone generator. Connector 11d is connected to alternate electrodes 14b and 14d while connector 11c is connected to alternate electrodes 14a and 14c. Thus, a high AC voltage is fed between electrodes 14a and 14b, electrodes 14b and 14c, and electrodes 14c and 14d. The high voltage applied between the electrodes causes an electric discharge in the spaces therebetween, thereby converting the oxygen in the air fed to these spaces to ozone. This ozone is sucked out from the ozone generator into injector nozzle 15, as now to be explained.

Injector nozzle 15 has an inlet pipe 27 through which the water stream to be injected with ozone is fed. The nozzle is generally tubular in shape and includes a relatively narrow chamber 19 which is connected through a ring of apertures 19a formed in the chamber walls to a chamber 20 which is externally concentric therewith. Chamber 20 has a narrowed neck portion 20a at the end of which is a disc-shaped deflector member 21, there being a narrow ring-shaped exit slit 22 formed between neck portion 20a and deflector 21 which connects chamber 20 to chamber 24. The water stream thus is deflected outwardly in the general form of a cone from chamber 20 to substantially wider cylindrical chamber 24 which is concentric with chamber 20. As already mentioned, tube 11b feeds ozone from ozone generator 11 to chamber 24 of the nozzle, this tube being connected to inlet tube 15a by means of a suitable gas line 12 (indicated schematically). The water is exited from chamber 24 through outlet pipe 30.

Referring now additionally to FIG 5, the nozzle operates in the following manner to develop suction to tube 11b so as to draw ozone to the nozzle and inject or implode it into the water stream. By virtue of the positioning and dimensions of deflector 21, water stream 41 is deflected outwardly in a conical form, an air pocket 42 being formed between the stream and the wall of chamber 24. The velocity of the water stream increases substantially at narrow slit 22, and the increased velocity water stream causes the adjacent air pocket 42 also to move at an increased velocity. By virtue of the high velocity air pocket, in accordance with Bernoulli's principle, strong suction is developed in inlet pipe 15a which draws the ozone from the ozone generator and effectively injects or implodes it into the water stream.

It has been found in an operative embodiment of the invention wherein chamber 24 has a longitudinal dimension of 3.81 cm (1-1/2") and a diameter of 2.54 cm (1") that optimum results can be achieved with a conical water stream 41 having a cone angle "a", as shown in FIG 5, which is 15—30° (the cone angle being defined as the angle between the wall of the cone and a line parallel to its longitudinal centerline). In this operative embodiment, the water stream first strikes the inner wall of chamber 24 at a point 24a therealong between the midpoint of the chamber and the water entry end thereof. The ozone injected water stream is fed from chamber 24 to outlet pipe 30 from where it runs to a swimming pool or other utilization device. It thus can be seen that the ozone is efficiently injected into the water stream without the need for any special pumping system; but rather by a unique suction technique incorporated in the design of the nozzle.

While the invention has been described and illustrated in detail, it is clearly to be understood that this is intended by way of illustration and example only and is not to be taken by way of limitation, the spirit and scope of this invention being limited only by the terms of the following claims.

## Claims

1. A system for generating ozone and injecting it into a water stream, the system comprising an ozone generator (11) including a plurality of oppositely positioned electrodes (14a—14d), means (13a—13d) for supporting said electrodes (14a—14d) in spaced apart relationship, with an air space formed therebetween and air inlet means (11a) at one end of said electrodes and air outlet means (11b) at the other end thereof, means (17) for generating a high voltage, and means (11c—11d) for applying said high voltage across the oppositely positioned electrodes (14a—14d) so as to cause an electric discharge and thereby generate ozone in said air space, the system further comprising an injector nozzle device (15) including first chamber means (20) into which the water stream is fed at one end thereof, said chamber means (20) having a narrowed neck portion (20a) formed at the other end thereof, a deflector member (21) mounted in said narrowed neck portion (20a), and second chamber means (24) connected to said first chamber means (20) to receive said water stream, characterised in that said deflector member (21) is disc-shaped, a ring-shaped slit (22) being formed between the outer edge of the disc-shaped deflector member (21) and the inner wall of the neck portion (20a), the deflector member (21) deflecting the water stream outwardly in the form of a cone, said second chamber means (24) being substantially wider than said first chamber means (20), the water stream cone striking the walls of the second chamber means (24) at a region remote from the ring-shaped slit (22), whereby an air pocket (42) is formed between the cone and the walls of said second chamber means (24), and means (15a) for feeding ozone from said ozone generator (11) to a portion of the second chamber means (24) into said air pocket (42), a suction being developed in said air pocket (42) which injects the ozone into the water stream.

2. A system according to claim 1, characterised in that said first chamber means (20) comprises a first cylindrical chamber (19) into which the water stream is initially fed and a second cylindrical chamber (20), which is wider than said first cylindrical chamber (19) and is connected to said first chamber (19) by a ring of apertures (19a) formed in an end wall portion of said first chamber (19) which is internally concentric with said second chamber (20).

3. A system according to claim 1 or 2, characterised in that the dimensions of said second chamber means (42) and said disc-shaped deflector member (21), and the position of said disc-shaped deflector member (21) in said first chamber means (20) is such as to cause the formation of a water cone having an angle between the wall of said second chamber means (24) and a centre line thereof of 15°—30°

4. A system according to any one of the preceding claims, characterised in that the means (13a—13d) for supporting said electrodes comprises at least two pairs of concentric nonconductive tubes, said electrodes (14a—14d) being formed by conductive material placed on one of the walls of each of said tubes (13a—13d).

5. A system according to claim 4, characterised in that said inlet means (11a) is formed by one of the ends of said tubes (13a—13d) which are left open, said outlet means (11b) being formed by a tube connected to said air space adjacent the other ends of said tubes (13a—13d).

## Patentansprüche

1. System zur Erzeugung von Ozon und dessen Einpressen in eine Wasserströmung, bestehend aus einem Ozonisator (11) mit einer Mehrzahl gegenüberliegender Elektroden (14a—14d), Mitteln (13a—13d) zur Abstützung dieser Elektroden (14a—14d) in gegenseitigem Abstand, mit einem dazwischen gebildeten Luftraum sowie einem Lufteinlass (11a) an einem Ende dieser Elektroden und einem Luftauslass (11b) an deren anderen Ende, einem Hochspannungsgenerator (17) und Mitteln (11c—11d) zum Anlegen dieser Hochspannung an die gegenüberliegenden Elektroden (14a—14d), um so eine elektrische Entladung herbeizuführen und dadurch in diesem Luftraum Ozon zu erzeugen, wobei das System weiterhin aus einer Einspritzdüsenvorrichtung (15) mit einer ersten Kammer (20), in die an einem Ende davon die Wasserströmung eingeführt wird und die einen an ihrem anderen Ende gebildeten, verengten Halsteil (20a) aufweist, wobei ein Ablenkglied (21) in diesem verengten Halsteil (20a) angebracht ist, und einer zweiten Kammer (24) besteht, die mit dieser ersten Kammer (20) zur Aufnahme dieser Wasserströmung verbunden ist, dadurch gekennzeichnet, dass dieses Ablenkglied (21) scheibenförmig ist, wobei zwischen der Aussenkante des scheibenförmigen Ablenkglieds (21) und der Innenwand des Halsteils (20a) ein ringförmiger Spalt (22) gebildet wird, wobei das Ablenkglied (21) die Wasserströmung kegelförmig nach aussen ablenkt, wobei diese zweite Kammer (24) wesentlich weiter als die erste Kammer (20) ist, und wobei der Wasserströmungskegel in einer von dem ringförmigen Spalt (22) entfernt gelegenen Zone auf die Wände der zweiten Kammer (24) auftrifft, wodurch sich zwischen dem Kegel und den Wänden dieser zweiten Kammer (24) ein Luftpolster (42) bildet, und dass Mittel (15a) zur Einleitung von Ozon aus diesem Ozonisator (11) zu einem Teil der zweiten Kammer (24) in dieses Luftpolster (42) vorgesehen sind, wobei sich in diesem Luftpolster (42) eine Saugwirkung entwickelt, welche das Ozon in die Wasserströmung einpresst.

2. System nach Anspruch 1, dadurch gekennzeichnet, dass diese erste Kammer (20) aus einer ersten zylindrischen Kammer (19), in welche die Wasserströmung zunächst eingeführt wird, und einer zweiten zylindrischen Kammer (20) besteht, die weiter als diese erste zylindrische Kammer (19) und mit dieser über einen Ring von in einem Stirnwandteil der ersten Kammer (19), die innenkonzentrisch mit dieser zweiten Kammer (20) ist, gebildeten Oeffnungen (19a) verbunden ist.

3. System nach Anspruch 2 oder 3, dadurch gekennzeichnet, dass diese zweite Kammer (24) und dieses scheibenförmige Ablenkglied (21) solche Abmessungen aufweisen und dieses scheibenförmige Ablenkglied (21) in dieser ersten Kammer (20) so angeordnet ist, dass sich dadurch ein Wasserkegel mit einem Winkel von 15°—30° zwischen der Wand dieser zweiten Kammer (24) und deren Mittellinie bildet.

4. System nach einem der vorhergehenden Ansprüche, dadurch gekennzeichnet, dass die Mittel (13a—13d) zur Abstützung dieser Elektroden aus mindestens zwei konzentrischen, nichtleitenden Rohrpaaren bestehen, wobei diese Elektroden (14a—14d) durch auf je eine Wand dieser Rohre (13a—13d) aufgebrachtes leitendes Material gebildet werden.

5. System nach Anspruch 4, dadurch gekennzeichnet, dass dieser Einlass (11a) durch ein Ende dieser Rohre (13a—13d), die offen bleiben, gebildet wird, wobei dieser Auslass (11b) durch ein mit jenem Luftraum neben den anderen Enden dieser Rohre (13a—13d) verbundenes Rohr gebildet wird.

**Revendications**

1. Système pour produire de l'ozone et l'injecter dans un courant d'eau, comportant un générateur d'ozone (11) comprenant plusieurs électrodes (14a à 14d) opposées les unes aux autres, des moyens (13a à 13d) pour supporter les électrodes (14a à 14d) à distance les unes des autres de manière qu'elles soient séparées par un espace d'air, une entrée d'air (11a) à une extrémité des électrodes et une sortie d'air (11b) à l'autre extrémité, un dispositif (17) pour produire une haute tension et des moyens (11c à 11d) pour appliquer cette haute tension aux électrodes opposées (14a à 14d) de manière à créer une décharge électrique et ainsi à produire de l'ozone dans l'espace d'air, ce système comprenant, en outre, un dispositif à injecteur (15) comprenant une première chambre (20) dans laquelle le courant d'eau est introduit à une extrémité, cette chambre (20) comportant un col resserré (20a) à son autre extrémité, un déflecteur (21) monté dans le col resserré (20a), une seconde chambre (24) raccordée à la première chambre (20) pour recevoir le courant d'eau, caractérisé en ce que le déflecteur (21) a la forme d'un disque, une fente annulaire (22) est formée entre le bord extérieur du déflecteur en forme de disque (21) et la paroi interne du col (20a), le déflecteur (21) fait dévier le courant d'eau vers l'extérieur sous la forme d'un cône, la seconde chambre (24) est sensiblement plus large que la première chambre (20), le cône du courant d'eau frappe les parois de la seconde chambre (24) dans une région éloignée de la fente annulaire (22), de sorte qu'une poche d'air (42) est formée entre le cône et les parois de la seconde chambre (24, et un moyen (15a) est prévu pour amener de l'ozone à partir du générateur d'ozone (11) à une partie de la seconde chambre (24) dans la poche d'air (42), une succion étant produite dans la poche d'air (42) pour injecter l'ozone dans le courant d'eau.

2. Système suivant la revendication 1, caractérisé en ce que la première chambre (20) comprend une première partie cylindrique (19) dans laquelle le courant d'eau est initialement introduit et une seconde partie cylindrique (20) qui est plus large que la première partie cylindrique (19) et qui est raccordée à celle-ci par une couronne d'ouvertures (19a) ménagée dans une partie de paroi d'extrémité de la première partie (19) qui est intérieurement concentrique à la seconde partie de chambre (20).

3. Système suivant la revendication 1 ou 2, caractérisé en ce que les dimensions de la seconde chambre (24) et du déflecteur en forme de disque (21) ainsi que la position du déflecteur en forme de disque (21) dans la première chambre (20) sont prévues pour former un cône d'eau dont l'angle entre la paroi de la seconde chambre (24) et un axe central de cette chambre est compris entre 15 et 30°.

4. Système suivant l'une quelconque des revendications précédentes, caractérisé en ce que les moyens de support (13a à 13d) des électrodes comprennent au moins deux paires de tubes non conducteurs concentriques, les électrodes (14a à 14d) étant faites d'une matière conductrice placée sur une des parois de chacun des tubes (13a à 13d).

5. Système suivant la revendication 4, caractérisé en ce que l'entrée (11a) est formée par une des extrémités des tubes (13a à 13d) qui restent ouvertes, la sortie (11b) étant formée par un tube raccordé à l'espace d'air près des autres extrémités des tubes (13a à 13d).

FIG.1

FIG.4

FIG.3

FIG.2

FIG.5